# DEMANDE DE BREVET EUROPEEN

(11) **EP 1 529 444 A1**
(43) Date de publication de la demande: **11.05.2005**
(21) Numéro de dépôt: 04292633.7
(22) Date de dépôt: 05.11.2004
(51) Int. Cl.: A23C 20/02

(54) **Caillé à base de lait végétal fermenté et procédé de fabrication d'un tel caillé**

(30) Priorité: 07.11.2003 FR 0313151
(71) Demandeur: PROTIAL, 49070 Beaucouze (FR)
(72) Inventeur: Vigneron, Jérôme, 85130 La Verrie (FR); De Martrin, Patrice, 49100 Angers (FR)
(74) Mandataire: Laget, Jean-Loup

(57) **Abrégé**

L'invention concerne un produit alimentaire de type fromage à base de lait végétal fermenté.

Ce produit alimentaire est caractérisé en ce qu'il est constitué d'un caillé de lait végétal fermenté, pré-affiné, présentant un taux de matières sèches rapporté au poids total du produit compris entre 12 et 18 %, de préférence compris entre 14 et 16 % et une teneur en sel rapporté exprimée en poids au poids total du produit comprise entre 0,5 % et 2 %, de préférence entre 1 % et 1,5 %, ce caillé ayant été éventuellement soumis à une étape de transformation par mise en forme et/ou par un affinage supplémentaire.

## Description

La présente invention concerne un produit alimentaire de type fromage, une matrice fromagère et un caillé à base de lait végétal fermenté ainsi qu'un procédé de fabrication d'un tel caillé.

Le lait végétal est utilisé dans l'industrie agroalimentaire depuis de nombreuses années. Un progrès important a été fait dans les années 1990 suite à la mise au point d'un procédé de fermentation de lait végétal décrit notamment dans le brevet EP-A-0.521.331. Ce brevet concerne en effet un procédé de fermentation de lait de soja utilisant un inoculum à base d'au moins deux souches spécifiques de Lactococcus conduisant à des produits à texture de type yaourt. De tels produits sont toutefois inutilisables en tant que substitut de fromage.

Un autre brevet, à savoir le brevet GB-A-1.356.363, décrit quant à lui un procédé de fabrication de produits alimentaires résultant de la fermentation lactique de lait de soja dans lequel il est nécessaire, après fermentation, de mettre en oeuvre une étape de chauffage du produit obtenu. Ces produits ne présentent pas cependant les qualités organoleptiques souhaitées et présentent une odeur et un goût végétal désagréables.

Les caractéristiques de l'égouttage qui ne peuvent constituer un pré-affinage, et du couple taux de matières sèches/concentration en sel ne permettent pas l'obtention d'un produit neutre dont les caractéristiques organoleptiques seraient assimilables à celles des produits issus de lait d'origine animale. D'autres exemples de préparation de produits alimentaires sont notamment décrits dans les brevets US-3.944.676, US-6.254.900 et US-5.597.594.

Un but de la présente invention est donc de proposer un nouveau produit alimentaire de type fromage ainsi qu'une matrice fromagère et un caillé de lait végétal dont les caractéristiques organoleptiques en font des produits neutres et fermes assimilables aux fromages traditionnels obtenus à partir de lait d'origine animale.

Un autre but de la présente invention est de proposer un caillé de lait végétal apte à être soumis à des étapes de transformation pour permettre l'obtention de toutes les formes de fromages fabriqués aujourd'hui à partir de lait d'origine animale.

A cet effet, l'invention a pour objet un produit alimentaire de type fromage à base de lait végétal fermenté, caractérisé en ce qu'il est constitué d'un caillé de lait végétal fermenté, pré-affiné, présentant un taux de matières sèches rapporté au poids total du produit compris entre 12 et 18 %, de préférence compris entre 14 et 16 % et une teneur en sel exprimée en poids rapporté au poids total du produit comprise entre 0,5 % et 2 %, de préférence entre 1 % et 1,5 %, ce caillé ayant été éventuellement soumis à une étape de transformation par mise en forme et/ou par un affinage supplémentaire.

L'invention a encore pour objet une matrice fromagère à base de lait végétal fermenté, pré-affiné, caractérisée en ce qu'elle est constituée d'un caillé de lait végétal pré-affiné présentant un taux de matières sèches rapporté au poids total de la matrice compris entre 12 et 18 %, de préférence compris entre 14 et 16 % et une teneur en sel exprimée en poids rapporté au poids total de la matrice comprise entre 0,5 % et 2 %, de préférence entre 1 % et 1,5 %.

L'invention a encore pour objet un caillé de lait végétal fermenté pour l'obtention de la matrice ou du produit de type fromage décrits ci-dessus, caractérisé en ce qu'il est constitué de lait végétal ensemencé en ferments lactiques et laissé à fermenter en présence d'adjuvants à la fermentation incluant au moins des sels de calcium et/ou de magnésium.

L'invention a encore pour objet un procédé de fabrication d'un caillé de lait végétal fermenté à texture ferme du type décrit ci-dessus, notamment pour l'obtention d'une matrice fromagère, caractérisé en ce qu'il comporte au moins une étape consistant à ensemencer du lait végétal en ferments lactiques puis à laisser à fermenter en présence d'adjuvants à la fermentation incluant au moins des sels de calcium et/ou de magnésium.

Les étapes d'égouttage et de pré-affinage sont des étapes fondamentales pour obtenir un produit alimentaire de type fromage à texture neutre et ferme dont les propriétés organoleptiques peuvent être assimilées à celles obtenues à partir de lait d'origine animale.

On note que la mise en oeuvre de sel de calcium ou de magnésium pendant la fabrication du caillé permet l'obtention de cette texture ferme. L'étape de salage qui s'opère après l'affinage permet quant à elle d'obtenir une matrice fromagère stable apte à une utilisation en l'état sous forme de fromage frais ou sous forme de fromage obtenu après des traitements supplémentaires d'affinage et de transformation.

L'invention sera bien comprise à la lecture de la description suivante d'exemples de réalisation.

Comme mentionné ci-dessus, l'objet de l'invention est d'obtenir un produit alimentaire de type fromage à base de lait végétal fermenté. Ce produit alimentaire de type fromage est constitué d'un caillé de lait végétal fermenté, pré-affiné, présentant un taux de matières sèches exprimé en poids rapporté au poids total du produit compris entre 12 et 18 %, de préférence compris entre 14 et 16 %, et une teneur en sel exprimée en poids rapporté en poids total du produit comprise entre 0,5 % et 2 %, de préférence entre 1 % et 1,5 %. On parlera de produit alimentaire de type fromage plus particulièrement lorsque ce caillé égoutté et pré-affiné aura été soumis à une étape supplémentaire de transformation par mise en forme et/ou par un affinage supplémentaire. On parlera de matrice fromagère à base de lait végétal fermenté préalablement à toute étape de mise en forme. Les étapes de mise en forme seront plus particulièrement décrites dans les exemples fournis ci-après.

Pour permettre l'obtention de tels produits alimentaires de type fromage à base de lait végétal fermenté, il est nécessaire d'obtenir au départ un caillé de lait végétal fermenté. Ce caillé de lait végétal est constitué de lait végétal ensemencé en ferments lactiques et laissé à fermenter en présence d'adjuvants à la fermentation incluant au moins des sels de calcium et/ou de magnésium. Ce lait végétal devant être ensemencé en ferments présente une teneur en protéines, exprimée en poids, rapporté au poids total du lait, supérieure à 3,6 %, de préférence entre 4 et 5 %, une teneur en matières grasses inférieure à 3 %, de préférence entre 1,5 et 2,5 % et un pH compris entre 6 et 6,8. Cette matière première, lorsqu'il s'agit de soja, est préparée par les techniques traditionnelles à partir de fèves de soja et d'eau puis éventuellement pasteurisée et/ou stérilisée.

Les ferments lactiques utilisés pour la réalisation de l'inoculum sont constitués d'au moins trois souches de ferments lactiques, tels que Lactoccocus lactis subsp. lactis, Lactoccocus lactis subsp. Cremoris et Lactoccocus lactis subsp. Lactis var. diacetylactis. Les adjuvants de fermentation incluent quant à eux en outre une source d'hydrates de carbone, en particulier de monosaccharides, du potassium, du sodium et éventuellement un mélange végétal à base d'extraits de levure et d'huile végétale. A titre d'exemple, il peut être ajouté à du lait, 0,01 % d'un mélange spécifique de ferments tel que décrit ci-dessus, 2,7 % de fructose cristallisé ou du concentrât de pommes qui vont permettre, par cet apport de monosaccharides, le développement des ferments, 0,14 % de sel marin, dont les ions sodium et potassium favorisent la fermentation, 0,60 % de sulfate de calcium, qui permettront de générer un caillé à texture ferme de type base fromagère et éventuellement 0,1 % de bouillon végétal composé principalement d'extraits de levures et d'huile de tournesol dans le but de favoriser la pousse des ferments.

Les sels de calcium et/ou de magnésium, introduits en tant qu'adjuvant de fermentation, sont des sels solubles dans l'eau et représentent de 0,40 à 0,80 % en poids, de préférence 0,60 % en poids par rapport à la quantité totale de lait nécessaire à la fabrication. Les ferments lactiques sont quant à eux ajoutés dans une proportion correspondant en poids à 0,005 à 0,015 %, de préférence à 0,01 % du poids total de lait nécessaire à la fabrication.

Préalablement à cette étape, qui consiste à ensemencer du lait végétal en ferments lactiques puis à fermenter en présence d'adjuvants à la fermentation incluant au moins des sels de calcium et/ou de magnésium, il est nécessaire de chauffer le lait végétal conservé à froid jusqu'à une température inférieure à 20°C. Lorsque cette température est atteinte, les adjuvants de fermentation puis les ferments peuvent être ajoutés. On maintient ensuite la température voisine de 20°C pendant toute la durée de fermentation. La fermentation est interrompue par abaissement de température lorsque le pH du lait est inférieur ou égal à 4,6.

Une fois l'étape de fermentation achevée, le caillé obtenu est alors soumis à une étape d'égouttage en vue de l'obtention d'un caillé présentant un taux de matière sèche compris entre 12 et 18 %, de préférence compris entre 14 et 16 %. Bien évidemment, l'étape d'assèchement du caillé par élimination du sérum en vue d'obtenir un taux de matières sèches prédéterminé peut être obtenu par un autre mode de mise en oeuvre que l'égouttage même si l'égouttage constitue un mode de réalisation préféré. L'étape d'égouttage s'effectue de préférence à une température inférieure à 10°C, de préférence comprise entre 4°C et 6°C, pendant une période de 2 à 10 jours, de préférence voisine de 4 jours en vue d'obtenir un pré-affinage du caillé dont le taux de matières sèches est maintenu entre 12 et 18 %, de préférence compris entre 14 et 16 %.

Une fois cette étape de pré-affinage achevée, on ajoute au caillé égoutté et pré-affiné, du sel dans une proportion comprise entre 0,5 et 2 %, de préférence comprise entre 1 et 1,5 % puis on soumet le caillé additionné de sel à un brassage en vue de l'obtention d'une matrice fromagère stable. Cette matrice fromagère stable constitue le produit commun à tous les produits de type fromage à base de lait végétal fermenté qui peuvent être obtenus dans le cadre de l'invention. On pourra obtenir ainsi des fromages frais, des fromages à pâte molle, des fromages à pâte persillée, des fromages à pâte pressée cuite, des fromages à pâte pressée non cuits, etc. qui présenteront des caractéristiques qualitatives (texture, aromatisation naturelle, goût) très proches de celles des fromages traditionnels. La matrice fromagère de base présente quant à elle des caractéristiques et des propriétés organoleptiques très proches de celles des fromages frais de chèvre.

Ainsi, à titre d'exemple, il est décrit ci-après la préparation d'affiné de soja frais qui peut être considéré comme un produit équivalent aux fromages frais de chèvre. Sa fabrication comprend les étapes suivantes. La matrice fromagère obtenue ci-dessus est mise en moule à raison d'environ 8 kg pour une plaque de 40 petits moules. L'ensemble est stocké à 5°C pendant deux jours puis démoulé. Il est procédé à un affinage complémentaire à 5°C pendant 4 jours et à un ajustement du poids de chaque affiné à 120 grammes. Des condiments, tels que poivre, ciboulette, échalote, etc. sont éventuellement additionnés en surface du produit. Le produit est conditionné puis stocké à 5°C jusqu'à sa commercialisation. Ces produits ont une durée de vie, à l'état réfrigéré, de l'ordre de 4 semaines. Cet affiné frais peut aussi être préparé à la grecque sous forme de petits cubes et conservé dans de l'huile avec des condiments à la manière de la fêta.

L'exemple ci-après concerne plus particulièrement la préparation de tommes affinées de soja. Ce produit est fabriqué selon une technologie très voisine de celle des fromages pressés à pâte non cuite telle que la tomme de chèvre ou de vache, le St Nectaire, le St Paulin, la raclette, la mimolette, le cheddar, etc. Le procédé d'obtention d'une telle tomme affinée de soja inclut les étapes suivantes. A nouveau, la matrice fromagère décrite ci-dessus est mise en moule à raison d'environ 1,9 kg/moule. Le moule est mis sous presse pendant 5 heures à 5°C avec augmentation progressive de la pression de 0,5 bars à 4 bars. L'ensemble est démoulé pour obtenir une masse de la tomme voisine de 1,6 kg. On procède ensuite à un affinage en hâloir à 5°C pendant 2 semaines avec un retournement des tommes tous les deux jours, puis tous les quatre jours et un saumurage de la face supérieure par pulvérisation d'eau salée saturée. La tomme obtenue présente une masse voisine de 1,2 kg. Cette tomme est conditionnée puis stockée à 5°C jusqu'à commercialisation. Les tommes peuvent être commercialisées entières ou en portions et ont une durée de vie, à l'état réfrigéré, de l'ordre de 8 semaines.

L'exemple décrit ci-après concerne quant à lui un procédé de fabrication de bleu affiné de soja. Ce produit est fabriqué selon une technologie équivalente à celle des fromages à pâte persillée de type roquefort, bleu d'Auvergne, Fourme d'Ambert, Gorgonzola, etc. Ce procédé de fabrication comprend à nouveau une étape de mise en moule de la matrice fromagère issue du procédé décrit ci-dessus à raison d'environ 1,9 kg par moule. Ces moules sont mis sous presse pendant 5 heures à 5°C avec augmentation progressive de la pression de 0,5 bars à 4 bars. Les moules sont démoulés pour obtenir une masse de la tomme voisine de 1,6 kg. On procède ensuite à une micro-injection de souches Penicillium roqueforti puis on affine en hâloir à 10°C pendant 4 semaines. On observe alors un développement des moisissures internes. On conditionne le produit puis on le stocke à 5°C jusqu'à commercialisation.

L'exemple décrit ci-après concerne quant à lui un exemple de préparation de meule affinée de soja. Les meules affinées de soja sont fabriquées selon une technologie très voisine de celle des fromages pressés à pâte cuite, tels que Gruyère, Comté, Beaufort, Emmental, Fribourg, Parmesan, etc. Ces produits peuvent être présentés sous forme de meules, de portions, de tranchettes, de mini-meules ou de râpés. Le procédé d'obtention d'un tel produit inclut une étape de préparation à froid dans une plage de température comprise entre 6 et 14°C d'une mêlée dans laquelle la matrice fromagère décrite ci-dessus est mélangée à de l'amidon de blé, des carraghénanes et du bicarbonate de sodium. Les proportions respectives des différents ingrédients sont les suivantes :
- matrice fromagère : 88,81 %
- amidon de blé 10,18 %
- carraghénanes 0,81 %
- bicarbonate de sodium 0,20 %

Il est ensuite procédé à un embossage de la mêlée dans des boyaux de petit diamètre, par exemple de 60 mm pour des mini-meules, ou de grand diamètre, tel qu'un diamètre de 120 mm pour des meules et des blocs à trancher ou à râper. Ces boyaux sont moulés pour obtenir la forme voulue puis sont cuits pendant deux heures et demie à 85°C. Les moules sont ensuite refroidis puis stockés au froid à une température comprise entre 0 et 6°C pendant 24 heures minimum. Il est ensuite procédé à un démoulage et à un tranchage à l'épaisseur désirée avant un conditionnement en sachet. Les sachets peuvent ensuite être pasteurisés avec un palier de 35 minutes à 90°C. Les produits sont ensuite stockés à une température comprise entre 0 et 4°C jusqu'à commercialisation de ces derniers. Ainsi, les meules et mini-meules obtenues peuvent être commercialisées entières, en portions, en tranchettes ou sous forme de râpés et ont une durée de vie à l'état réfrigéré de l'ordre de quatre mois.

Les exemples ci-dessus illustrent la possibilité de transformer la matrice fromagère obtenue en de nombreux produits de type fromager en adaptant les techniques traditionnelles de la fromagerie. La qualité des produits obtenus en terme de texture et de goût est supérieure à celle des succédanés de fromage à base de soja présent actuellement sur le marché.

## Revendications

1. Produit alimentaire de type fromage à base de lait végétal fermenté,
**caractérisé en ce qu'**il est constitué d'un caillé de lait végétal fermenté, pré-affiné, présentant un taux de matières sèches, rapporté au poids total du produit, compris entre 12 et 18 %, de préférence compris entre 14 et 16 %, et une teneur en sel exprimée en poids rapporté au poids total du produit comprise entre 0,5 % et 2 %, de préférence entre 1 % et 1,5 %, ce caillé ayant été éventuellement soumis à une étape de transformation par mise en forme et/ou par un affinage supplémentaire.

2. Matrice fromagère à base de lait végétal fermenté,
**caractérisée en ce qu'**elle est constituée d'un caillé de lait végétal, fermenté, pré-affiné, présentant un taux de matières sèches rapporté au poids total de la matrice compris entre 12 et 18 %, de préférence compris entre 14 et 16 % et une teneur en sel exprimée en poids, rapporté au poids total de la matrice, comprise entre 0,5 % et 2 %, de préférence entre 1 % et 1,5 %.

3. Matrice fromagère selon la revendication 2,
**caractérisée en ce que** le lait végétal fermenté est pré-affiné par stockage à froid à une température inférieure à 10°C, de préférence comprise entre 4°C et 6°C, pendant une période de 2 à 10 jours, de préférence voisine de 4 jours.

4. Caillé de lait végétal fermenté pour l'obtention d'une matrice fromagère de type fromage ou d'un produit conforme à l'une des revendications 1 à 3,
**caractérisé en ce qu'**il est constitué de lait végétal ensemencé en ferments lactiques et laissé à fermenter en présence d'adjuvants à la fermentation incluant au moins des sels de calcium et/ou de magnésium.

5. Caillé selon la revendication 4,
**caractérisé en ce que** le lait végétal devant être ensemencé en ferments présente une teneur en protéines, exprimée en poids, rapporté au poids total du lait, supérieure à 3,6 %, de préférence entre 4 et 5 %, une teneur en matières grasses inférieure à 3 %, de préférence entre 1,5 et 2,5 %, et un pH compris entre 6 et 6,8.

6. Caillé selon l'une des revendications 4 et 5,
**caractérisé en ce que** les ferments lactiques sont constitués d'au moins trois souches de ferments lactiques, tels que Lactoccocus lactis subsp. lactis, Lactoccocus lactis subsp. Cremoris et Lactoccocus lactis subsp. Lactis var. diacetylactis.

7. Caillé selon l'une des revendications 4 à 6,
**caractérisé en ce que** les adjuvants de fermentation incluent en outre une source d'hydrates de carbone, en particulier de monosaccharides, du potassium, du sodium et éventuellement un mélange végétal à base d'extraits de levure et d'huile végétale.

8. Caillé selon l'une des revendications 4 à 7,
**caractérisé en ce que** les sels de calcium et/ou de magnésium sont des sels solubles dans l'eau et représentent de 0,40 à 0,80 % en poids, de préférence 0,60 % en poids, par rapport à la quantité totale de lait nécessaire à la fabrication.

9. Caillé selon l'une des revendications 4 à 8,
**caractérisé en ce que** les ferments lactiques sont ajoutés dans une proportion correspondant en poids, à 0,005 à 0,015 %, de préférence à 0,01 %, du poids total de lait nécessaire à la fabrication.

10. Procédé de fabrication d'un caillé de lait végétal fermenté à texture ferme conforme à l'une des revendications 4 à 9, notamment pour l'obtention d'une matrice fromagère conforme à l'une des revendications 2 et 3,
**caractérisé en ce qu'**il comporte au moins une étape consistant à ensemencer du lait végétal en ferments lactiques puis à laisser à fermenter en présence d'adjuvants à la fermentation incluant au moins des sels de calcium et/ou de magnésium.

11. Procédé de fabrication selon la revendication 10,
**caractérisé en ce qu'**il consiste, préalablement à l'ensemencement, à chauffer le lait végétal conservé à froid jusqu'à une température inférieure à 20°C, à rajouter les adjuvants de fermentation puis les ferments, et à maintenir la température voisine de 20°C, pendant toute la durée de fermentation

12. Procédé de fabrication selon l'une des revendications 10 et 11,
**caractérisé en ce qu'**il consiste à interrompre la fermentation par abaissement de température lorsque le pH du lait est inférieur ou égal à 4,6.

13. Procédé de fabrication selon l'une des revendications 10 à 12,
**caractérisé en ce qu'**il consiste à soumettre le caillé obtenu à l'issue de la fermentation à une étape d'égouttage en vue de l'obtention d'un caillé présentant un taux de matière sèche compris entre 12 % et 18 %, de préférence compris entre 14 et 16 %.

14. Procédé de fabrication selon la revendication 13,
**caractérisé en ce qu'**il consiste à égoutter le caillé à une température inférieure à 10°C, de préférence comprise entre 4°C et 6°C pendant une durée de 2 à 10 jours, de préférence voisine de 4 jours, en vue d'obtenir un pré-affinage du caillé dont le taux de matières sèches est compris entre 12 et 18 %, de préférence compris entre 14 et 16 %.

15. Procédé de fabrication selon l'une des revendications 13 et 14,
**caractérisé en ce qu'**il consiste à ajouter au caillé égoutté et pré-affiné du sel, dans une proportion comprise entre 0,5 % et 2 %, de préférence comprise entre 1 % et 1,5 %, et à soumettre le caillé additionné de sel à un brassage en vue de l'obtention d'une matrice fromagère stable.
